# EUROPÄISCHE PATENTANMELDUNG

(11) **EP 4 545 874 A1**
(43) Veröffentlichungstag der Anmeldung: **30.04.2025**
(21) Anmeldenummer: 23205288.6
(22) Anmeldetag: 23.10.2023
(51) Int. Cl.: F24S 25/11, F24S 25/636

(54) **AUFSTELLER ZUR AUFSTELLUNG VON WENIGSTENS EINEM SOLARMODUL AUF EINEM UNTERGRUND UND VERFAHREN ZUR ANORDNUNG VON WENIGSTENS EINEM SOLARMODUL AN EINEM SOLCHEN AUFSTELLER**

(71) Anmelder: Solardirekt Systems GmbH, 48431 Rheine (DE)
(72) Erfinder: BRINKMANN, Manfred, 48431 Rheine (DE)
(74) Vertreter: Berkenbrink, Kai-Oliver

(57) **Zusammenfassung**

Die Erfindung betrifft einen Aufsteller (1) zur Aufstellung von wenigstens einem Solarmodul (200) auf einem Untergrund sowie ein Verfahren zur Anordnung von wenigstens einem Solarmodul (200) an einem solchen Aufsteller (1).

## Beschreibung

Die Erfindung betrifft einen Aufsteller zur Aufstellung von wenigstens einem Solarmodul auf einem Untergrund sowie ein Verfahren zur Anordnung von wenigstens einem Solarmodul an einem solchen Aufsteller.

Ein Solarmodul, das auch als Photovoltaikmodul oder Solarpaneel bezeichnet wird, wandelt das Licht der Sonne in elektrische Energie um. Das Modul umfasst Solarzellen, die zwischen Platten eingebettet sind, wobei eine der Platten transparent für das Licht der Sonne ist, so dass das Licht der Sonne durch diese Platte auf die Solarzellen fallen kann. Die Solarzellen und die Platten sind von einem Metallrahmen mit einer rechteckigen Außenkontur umfasst. Ein Solarmodul weist damit die Form einer Platte mit einer rechteckigen Außenkontur auf. Damit liegen sich jeweils zwei der Außenkanten des Solarmoduls parallel gegenüber.

Zur Aufstellung solcher Solarmodule auf einem Untergrund werden sogenannte Aufsteller verwendet, die teilweise auch als Aufständerung, Montagesystem oder Halterung für Solarmodule bezeichnet werden. Ein oder mehrere Solarmodule sind an einem solchen Aufsteller anordenbar und über den Aufsteller auf einem Untergrund aufstellbar. Bevorzugt sind Solarmodule in einer schrägen Ausrichtung zum Untergrund an dem Aufsteller anordenbar, so dass das Solarmodul in einem vorteilhaften Winkel zur Sonne ausrichtbar ist. Um die Standsicherheit des Aufstellers, insbesondere bei Windlast, zu vermeiden, kann der Aufsteller über Beschwerungsmittel beschwert oder am Untergrund befestigbar sein.

Bekannt sind solche Aufsteller auch in Form von Kunststoffformteilen. Solche Kunststoffformteile haben insbesondere den Vorteil einer einfachen Herstellung sowie einer einfachen Aufstellung auf einem Untergrund. Solche Kunststoffformteile sind auf einen Untergrund auflegbar und umfassen einen Bereich, an dem ein Solarmodul anordenbar ist.

Solche Aufsteller in Form von Kunststoffformteilen sind auch in Form einstückiger Kunststoffformteile bekannt, bei denen Solarmodule über einen Rastmechanismus mit dem Kunststoffformteil verrastet werden können. Entsprechende Kunststoffformteile sind beispielsweise aus EP 3 101 367 A1 bekannt. Ein Nachteil eines solchen Rastmechanismus liegt jedoch darin, dass er in der Regel nur für Solarmodule einer spezifischen Dimension geeignet ist.

Ferner sind Aufsteller in Form von Kunststoffformteilen bekannt, an denen Aluminiumschienen zur Anordnung von Solarmodulen befestigbar sind. Ein solcher Aufsteller ist beispielsweise in EP 2 447 620 A1 offenbart. Ein Nachteil solcher Aufsteller liegt jedoch darin, dass bauseitig gesonderte Arbeitsschritte zur Befestigung der Aluminiumschienen an den Kunststoffformteilen notwendig sind, wobei ferner passende Aluminiumschienen auszuwählen sind. Falls jedoch keine passenden Aluminiumschienen gewählt oder diese nicht korrekt an dem Kunststoffformteil befestigt werden, können Solarmodule nicht optimal am Aufsteller angeordnet werden.

Der Erfindung liegt die Aufgabe zugrunde, einen Aufsteller zur Aufstellung von wenigstens einem Solarmodul auf einem Untergrund zur Verfügung zu stellen, welcher einfach herstellbar ist und an welchem Solarmodule unterschiedlicher Dimensionen einfach anordenbar sind. Insbesondere liegt der Erfindung die Aufgabe zugrunde, einen solchen Aufsteller zur Verfügung zu stellen, an welchem Solarmodule nicht nur einfach, sondern auch sicher und insbesondere auch dauerhaft anordenbar sind. Insbesondere liegt der Erfindung die Aufgabe zugrunde, einen solchen Aufsteller zur Verfügung zu stellen, der ein auf einem Untergrund auflegbares Kunststoffteil, an dem ein Solarmodul befestigbar ist, umfasst.

Zur Lösung dieser Aufgabe wird erfindungsgemäß zur Verfügung gestellt ein Aufsteller zur Aufstellung von wenigstens einem Solarmodul auf einem Untergrund, wobei der Aufsteller die folgenden Merkmale umfasst:
ein Kunststoffteil, welches auf einen Untergrund auflegbar ist;
wenigstens ein Metallteil, wobei an diesem wenigstens ein Befestigungsmittel für ein Solarmodul anordenbar ist; und wobei
das wenigstens eine Metallteil formschlüssig mit dem Kunststoffteil verbunden ist.

Die Erfindung beruht insbesondere auf der überraschenden Erkenntnis, dass die vorstehenden Aufgaben einfach und effektiv dadurch gelöst werden können, dass der Aufsteller ein Kunststoffteil und wenigstens ein formschlüssig mit dem Kunststoffteil verbundenes Metallteil umfasst. Das wenigstens eine Metallteil ist dabei erfindungsgemäß derart gestaltet, dass an diesem wenigstens einen Befestigungsmittel für ein Solarmodul anordenbar ist. Über das Befestigungsmittel ist ein Solarmodul an dem Aufsteller befestigbar. Der erfindungsgemäße Aufsteller umfasst erfindungsgemäß ferner ein Kunststoffteil, welches auf einen Untergrund auflegbar ist. Insoweit basiert der erfindungsgemäße Aufsteller auf den aus dem Stand der Technik bekannten Aufstellern in Form eines auf einen Untergrund auflegbaren Kunststoffteils. Im Gegensatz zu den aus dem Stand der Technik bekannten Aufstellern auf Basis eines Kunststoffformteiles, weist der erfindungsgemäße Aufsteller zur Befestigung eines Solarmoduls an dem Aufsteller jedoch wenigstens ein Metallteil auf, das formschlüssig mit dem Kunststoffteil verbunden ist.

Erfindungsgemäß hat sich herausgestellt, dass ein solches Metallteil die Anordnung von Solarmodulen verschiedener Dimensionen an dem Aufsteller ermöglicht, da Befestigungsmittel für Solarmodule flexibel an einem Metallteil anordenbar sind. Insbesondere erlaubt es ein Metallteil beispielsweise, dass ein Befestigungsmittel in verschiedenen Positionen an dem Metallteil anordenbar ist, so dass die Position des Befestigungsmittels am Aufsteller an die spezifische Dimension eines Solarmoduls angepasst werden kann.

Ferner kann das Metallteil vorteilhaft bereits werksseitig bei der Herstellung des Aufstellers formschlüssig mit dem Kunststoffteil verbunden werden. Dies hat insbesondere den Vorteil, dass es bauseitig keines gesonderten Arbeitsschrittes zur Befestigung des Metallteils an dem Kunststoffteil bedarf. Ferner ist das Metallteil stets optimal mit dem Kunststoffteil verbunden.

Ferner hat sich erfindungsgemäß überraschend herausgestellt, dass ein erfindungsgemäß unter Formschluss mit dem Kunststoffteil verbundenes Metallteil eine besonders sichere und gleichzeitig dauerhafte Befestigung eines Solarmoduls an dem Aufsteller ermöglicht. So kann zum einen ein Solarmodul über das am Metallteil anordenbare Befestigungsmittel sehr fest mit dem Metallteil verbunden werden, insbesondere fester als über Kunststoffrastmittel, wie beispielsweise gemäß EP 3 101 367 A1. Gleichzeitig kann die vom Metallteil aufgenommene Last aufgrund des Formenschlusses jedoch auch wesentlich gleichmäßiger auf das Kunststoffteil übertragen werden als beispielsweise bei gesondert am Kunststoffteil zu befestigenden Metallschienen, wie sie beispielsweise in EP 2 447 620 A1 offenbart werden. Hierdurch kann eine örtliche Lastspitze, die zu einem Versagen der Verbindung zwischen Metallteil und Kunststoffteil führen könnte, vermieden werden. Insbesondere kann eine sehr gleichmäßig von Metallteil auf das Kunststoffteil übertragbare Last erreicht werden, wenn das Metallteil, wie nachfolgend ausgeführt, in das Kunststoffteil eingebettet beziehungsweise eingeformt ist.

Nach einer bevorzugten Ausführungsform ist das wenigstens eine Metallteil in das Kunststoffteil eingebettet. Durch eine solche Einbettung ist das wenigstens eine Metallteil formschlüssig mit dem Kunststoffteil verbunden.

Nach einer bevorzugten Ausführungsform ist das wenigstens eine Metallteil in das Kunststoffteil eingeformt, besonders bevorzugt durch Insert-Molding in das Kunststoffteil eingeformt. Bekanntermaßen handelt es sich bei Insert-Molding um einen Prozess, bei dem Kunststoff um ein Metallteil herum geformt wird. Insbesondere kann Kunststoff durch Spritzgießen oder durch Tiefziehen (Thermoforming) um das Metallteil herum geformt werden. Insoweit kann nach einer bevorzugten Ausführungsform vorgesehen sein, dass das wenigstens eine Metallteil durch Insert-Molding mittels Spritzgießen in das Kunststoffteil eingeformt ist. Noch bevorzugter kann nach einer alternativen Ausführungsform vorgesehen sein, dass das wenigstens eine Metallteil durch Insert-Molding mittels Tiefziehens in das Kunststoffteil eingeformt ist. In beiden Fällen ist das wenigstens eine Metallteil durch Insert-Molding formschlüssig mit dem Kunststoffteil verbunden beziehungsweise in dieses eingeformt.

Erfindungsgemäß hat sich herausgestellt, dass durch Insert-Molding das wenigstens eine Metallteil besonders einfach formschlüssig mit dem Kunststoffteil verbindbar ist und das wenigstens eine Metallteil besonders fest und dauerhaft mit dem Kunststoffteil verbindbar ist.

Nach einer bevorzugten Ausführungsform kann vorgesehen sein, dass das Kunststoffteil einstückig ist. Nach einer besonders bevorzugten Ausführungsform kann vorgesehen sein, dass das Kunststoffteil als einstückiges Kunststofftiefziehteil ausgebildet ist. Bekanntermaßen handelt es sich bei einem Kunststofftiefziehteil um ein Kunststoffteil, welches durch Tiefziehen hergestellt ist. Nach einer besonders bevorzugten Ausführungsform kann das Kunststoffteil als einstückiges Kunststofftiefziehteil ausgebildet sein, wobei das wenigstens eine Metallteil, wie oben ausgeführt, durch Insert-Molding in das Kunststoffteil eingeformt ist.

Der erfindungsgemäße Aufsteller kann eines oder mehrere Metallteile umfassen, die erfindungsgemäß jeweils formschlüssig mit dem Kunststoffteil verbunden sind und an denen jeweils wenigstens ein Befestigungsmittel für ein Solarmodul anordenbar ist. Jedes dieser Metallteile kann dabei wie hierin offenbart gestaltet sein.

Grundsätzlich kann das wenigstens eine Metallteil eine beliebige Gestalt aufweisen, an der wenigstens ein Befestigungsmittel für ein Solarmodul anordenbar ist.

Nach einer besonders bevorzugten Ausführungsform ist das wenigstens eine Metallteil derart gestaltet, dass an diesem wenigstens ein Befestigungsmittel für ein Solarmodul verschiebbar anordenbar ist.

Metallteile, an denen Befestigungsmittel für Solarmodule verschiebbar anordenbar sind, sind im Stand der Technik weit verbreitet. Solche Metallteile sind übliche Elemente von Konstruktionen zur Befestigung von Solarmodule an einem Dach. Solche Metallteile, an denen Befestigungsmittel für ein Solarmodul verschiebbar anordenbar sind, werden im Stand der Technik üblicherweise als Profilschiene oder auch Montageschiene bezeichnet. Solche Profilschienen weisen eine Nut auf, in denen ein Abschnitt eines Befestigungsmittels für ein Solarmodul verschiebbar anordenbar ist.

Nach einer besonders bevorzugten Ausführungsform kann erfindungsgemäß vorgesehen sein, dass das wenigstens eine Metallteil einen nutförmigen Abschnitt umfasst, in dem wenigstens ein Befestigungsmittel für ein Solarmodul verschiebbar anordenbar ist.

Nach einer bevorzugten Ausführungsform ist das wenigstens eine Metallteil in Form einer Profilschiene gestaltet, die einen nutförmigen Abschnitt umfasst, in dem wenigstens ein Befestigungsmittel für ein Solarmodul verschiebbar anordenbar ist. Ein solches Metallteil in Form einer Profilschiene kann gemäß den aus dem Stand der Technik bekannten Profilschienen zur Anordnung von Befestigungsmittel für Solarmodule, insbesondere in Form von Modulklemmen, gestaltet sein.

Nach einer bevorzugten Ausführungsform kann vorgesehen sein, dass an dem wenigstens einen Metallteil wenigstens ein Befestigungsmittel für ein Solarmodul in Form wenigstens einer Modulklemme anordenbar ist.

Modulklemmen sind aus dem Stand der Technik bekannt. Sie dienen zur Befestigung von Solarpanelen an Profilschienen. Modulklemmen umfassen einen Nutenstein, der in der Nut der Profilschiene verschiebbar anordenbar ist. Solche Nutensteinen gemäß dem Stand der Technik umfassen regelmäßig ein Innengewinde, in die eine Schraube einschraubbar ist. Diese Schrauben halten ferner eine Metallklemme, die über die Schraube gegen den Nutenstein schraubbar ist. Hierdurch kann die Kante eines Solarmoduls über die Klemme gegen die Profilschiene geschraubt und durch Quetschung beziehungsweise Klemmung zwischen der Klemme und der Profilschiene befestigt werden.

Nach einer bevorzugten Ausführungsform kann erfindungsgemäß vorgesehen sein, dass das wenigstens eine Metallteil einen nutförmigen Abschnitt umfasst, in dem wenigstens ein Nutenstein verschiebbar anordenbar ist. Besonders bevorzugt kann es sich bei diesem Nutenstein um einen solchen für eine Modulklemme für ein Solarmodul handeln.

Das wenigstens eine Metallteil besteht bevorzugt aus Aluminium und liegt besonders bevorzugt, wie zuvor ausgeführt, in Form eines Aluminiumprofils, insbesondere in Form eines Aluminiumprofils in Form einer Profilschiene vor.

Ein wesentlicher Vorteil eines solchen Metallteils, an dem ein Befestigungsmittel für ein Solarmodul verschiebbar anodenbar ist, liegt insbesondere darin, dass dieses eine flexible Anpassung des Aufstellers an eine spezifische Dimension eines Solarmoduls ermöglicht. Eine solche Verschiebbarkeit des Befestigungsmittels an dem wenigstens einen Metallteil erlaubt es grundsätzlich, dass an dem erfindungsgemäßen Aufsteller ein Solarmodul einer beliebigen Dimension angeordnet wird.

Diese Verschiebbarkeit des wenigstens einen Befestigungsmittels kann besonders einfach und effektiv dadurch erreicht werden, dass das wenigstens eine Metallteil einen nutförmigen Abschnitt umfasst, in dem das Befestigungsmittel verschiebbar ist. Hierdurch kann das Befestigungsmittel entlang des nutförmigen Abschnitts in eine beliebige Position geschoben werden, um das Solarmodul gemäß dessen spezifischer Dimension passend am Aufsteller anzuordnen.

Nach einer bevorzugten Ausführungsform kann vorgesehen sein, dass an dem wenigstens einen Metallteil wenigstens ein Befestigungsmittel für ein Solarmodul entlang eines Oberflächenabschnitts des Kunststoffteils verschiebbar anordenbar ist. Dies ermöglichst es in besonders einfacher Weise, ein Solarmodul einer spezifischen Dimension an dem Aufsteller zu befestigen, indem das Befestigungsmittel entlang eines Oberflächenabschnitts des Kunststoffteils, an dem ein Solarmodul gegen den Aufsteller anliegt, in eine optimale Position geschoben wird und in dieser Position das Solarmodul anschließend über das Befestigungsmittel am Aufsteller befestigt wird.

Nach einer besonders bevorzugten Ausführungsform ist an dem wenigstens einen Metallteil wenigstens ein Befestigungsmittel in Form einer Modulklemme anordenbar. Solche Modulklemmen können gemäß dem Stand der Technik, wie oben ausgeführt, gestaltet sein.

Nach einer bevorzugten Ausführungsform kann vorgesehen sein, dass an dem wenigstens einen Metallteil wenigstens zwei Befestigungsmittel für ein Solarmodul anordenbar sind. Dies ermöglicht es insbesondere, dass über den erfindungsgemäßen Aufsteller eine Kante eines Solarmoduls über zwei Befestigungsmittel an dem erfindungsgemäßen Aufsteller befestigbar sind.

Nach einer bevorzugten Ausführungsform kann vorgesehen sein, dass an dem wenigstens einen Metallteil wenigstens zwei Befestigungsmittel für ein Solarmodul anordenbar sind und wobei das Kunststoffteil derart gestaltet ist, dass bei Auflegung des Kunststoffteils auf einem ebenen Untergrund eines der zwei Befestigungsmittel in einer höheren Position und eines der zwei Befestigungsmittel in einer niedrigeren Position an dem wenigstens einen Metallteil anordenbar sind. Diese Ausführungsform ermöglicht es, ein Solarmodul in einer schräg zu einem ebenen Untergrund verlaufenden Position an dem Aufsteller anzuordnen.

Ein "Untergrund" im Sinne der Erfindung kann grundsätzlich ein beliebiger Untergrund sein, auf dem ein Aufsteller zur Aufstellung von einem Solarmodul aufstellbar ist, also beispielsweise ein Flachdach oder ein sonstiger Untergrund. Ein "ebener Untergrund" im Sinne der Erfindung ist ein ebener, sich horizontal erstreckender Untergrund.

Das Kunststoffteil des erfindungsgemäßen Aufstellers kann grundsätzlich eine beliebige Form aufweisen.

Nach einer bevorzugten Ausführungsform kann vorgesehen sein, dass das Kunststoffteil einen Abschnitt aufweist, an dem ein Solarmodul anordenbar ist. Bevorzugt weist dieser Abschnitt, an dem ein Solarmodul anordenbar ist, das wenigstens eine Metallteil auf.

Dieser Abschnitt, an den das Solarmodul anordenbar ist, kann bevorzugt eine plattenförmige Gestalt aufweisen, bevorzugt mit einer rechteckigen Außenkontur.

Nach einer bevorzugten Ausführungsform kann vorgesehen sein, dass dieser Abschnitt, an dem ein Solarmodul an dem Kunststoffteil anordenbar ist, bei Auflage des Kunststoffteils auf einen ebenen Untergrund, schräg zum Untergrund verläuft. Dies hat den Vorteil, dass ein an dem Abschnitt angeordnetes Solarmodul schräg zum Untergrund verläuft.

Nach einer Ausführungsform kann vorgesehen sein, dass das Kunststoffteil wenigstens einen Abschnitt umfasst, über den das Kunststoffteil auf einem Untergrund auflegbar ist. Dieser wenigstens eine Abschnitt, über den das Kunststoffteil auf einen Untergrund auflegbar ist, kann beispielsweise fuß- oder plattenförmig gestaltet sein.

Nach einer Ausführungsform kann vorgesehen sein, dass das Kunststoffteil einen wie vorstehend ausgebildeten Abschnitt umfasst, an dem ein Solarmodul anordenbar ist, und ferner zwei Abschnitte umfasst, über die das Kunststoffteil auf einen Untergrund auflegbar ist. Bevorzugt können diese zwei Abschnitte an gegenüberliegenden Seiten des Abschnitts, an dem ein Solarmodul an dem Kunststoffteil anordenbar ist, angeordnet sein. Das Kunststoffteil weist in diesem Fall einen im Wesentlichen brückenartigen Aufbau auf.

Nach einer bevorzugten Ausführungsform kann vorgesehen sein, dass die Abschnitte des Kunststoffteils, über welche das Kunststoffteil auf einen Untergrund auflegbar ist, derart gestaltet sind, dass auf diese Beschwerungsmittel auflegbar sind. Über solche Beschwerungsmittel, beispielsweise in Form von Steinplatten, kann die Standsicherheit des Aufstellers auf einem Untergrund erhöht werden.

Nach einer Ausführungsform kann vorgesehen sein, dass das Kunststoffteil eine Anschlagkante umfasst, gegen die ein Solarmodul anschlagbar ist. Eine solche Anschlagkante kann insbesondere zur Halterung und Justierung eines Solarmoduls bei dessen Anordnung an dem Aufsteller dienen. Nach einer bevorzugten Ausführungsform ist eine solche Anschlagkante randseitig eines wie vor beschriebenen Abschnitt des Kunststoffteils, an dem ein Solarmodul anordenbar ist, angeordnet.

Nach einer Ausführungsform umfasst der erfindungsgemäße Aufsteller wenigstens ein Solarmodul.

Nach einer Ausführungsform umfasst der erfindungsgemäße Aufsteller Befestigungsmittel für ein Solarmodul, insbesondere Befestigungsmittel in Form von Modulklemmen.

Nach einer Ausführungsform kann vorgesehen sein, dass der Aufsteller wenigstens ein Solarmodul sowie Befestigungsmittel für das wenigstens eine Solarmodul umfasst, wobei die Befestigungsmittel an dem wenigstens einen Metallteil angeordnet sind und wobei das wenigstens eine Solarmodul über die Befestigungsmittel an dem Aufsteller befestigbar oder befestigt ist.

Erfindungsgemäß kann bevorzugt vorgesehen sein, dass ein Solarmodul über wenigstens zwei erfindungsgemäße Aufsteller auf einen Untergrund aufgestellt ist. Insoweit kann bevorzugt vorgesehen sein, dass gegenüberliegende Kanten eines Solarmoduls jeweils an einem erfindungsgemäßen Aufsteller befestigt sind.

Gegenstand der Erfindung ist auch ein Verfahren zur Anordnung von wenigstens einem Solarmodul an wenigstens einem erfindungsgemäßen Aufsteller, wobei das Verfahren die folgenden Schritte umfasst:
Zur Verfügungstellung wenigstens eines erfindungsgemäßen Aufstellers;
Zur Verfügungstellung wenigstens eines Solarmoduls;
Auflegen des Kunststoffteils des wenigstens einen Aufstellers auf einen Untergrund;
Befestigung des wenigstens einen Solarmoduls an dem wenigstens einen Aufsteller.

Die Befestigung des wenigstens einen Solarmoduls kann dabei wie hierin ausgeführt erfolgen, also über die Anordnung der Befestigungsmittel an dem wenigstens einen Metallteil und die Befestigung des wenigstens einen Solarmoduls an dem Aufsteller über die Befestigungsmittel.

Weitere Merkmale der Erfindung ergeben sich aus den Ansprüchen, den beigefügten Figuren und der zugehörigen Figurenbeschreibung.

Sämtliche Merkmale de Erfindung können, einzeln oder in Kombination, beliebig miteinander kombiniert sein.

Ein Ausführungsbeispiel der Erfindung wird anhand der beigefügten Figuren und der nachfolgenden Figurenbeschreibung näher erläutert.

In den Figuren zeigt
- Figur 1: ein Ausführungsbeispiel eines erfindungsgemäßen Aufstellers in einer perspektivischen Ansicht von schräg oben;
- Figur 2: den Aufsteller gemäß Figur 1 in einer Ansicht von oben:
- Figur 3: den Aufsteller gemäß Figur 1 in einer Schnittansicht entlang der Nuten der Metallteile;
- Figur 4: eine Schnittansicht eines Bereiches des Aufstellers gemäß Figur 1;
- Figur 5: den Aufsteller gemäß Figur 1, ergänzt um ein Solarmodul und Befestigungsmittel, in einer perspektivischen Ansicht von schräg oben; und
- Figur 6: eine Schnittansicht eines Bereiches des Aufstellers gemäß Figur 5.

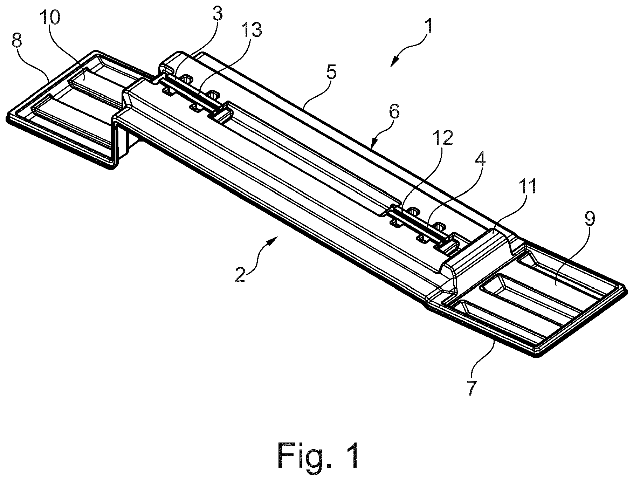

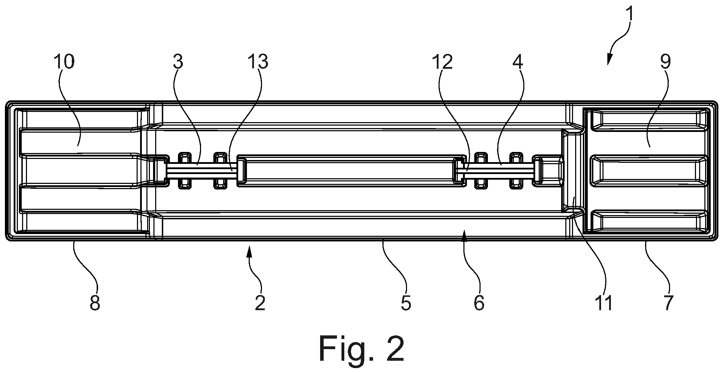

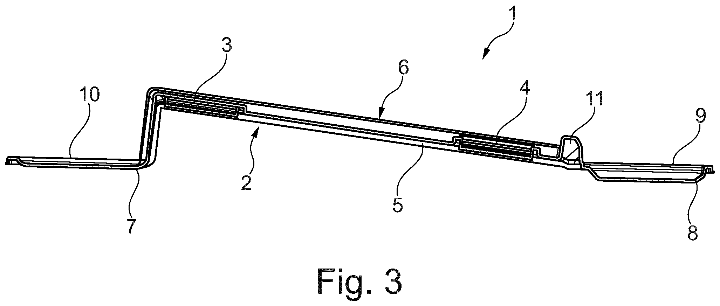

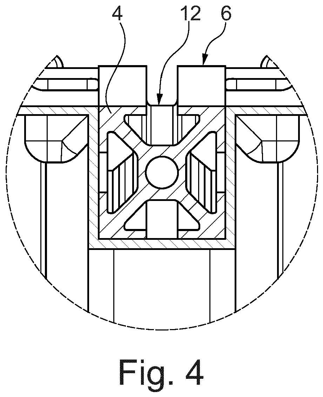

In seiner Gesamtheit ist der Aufsteller gemäß den Figuren mit dem Bezugszeichen 1 gekennzeichnet. Der Aufsteller 1 gemäß den Figuren 1-4 umfasst ein Kunststoffteil 2 sowie zwei Metallteile 3, 4. Gemäß den Figuren 4-5 sind ferner ein Solarmodul 200 und Modulklemmen 300, 400 am Aufsteller 1 anngeordnet.

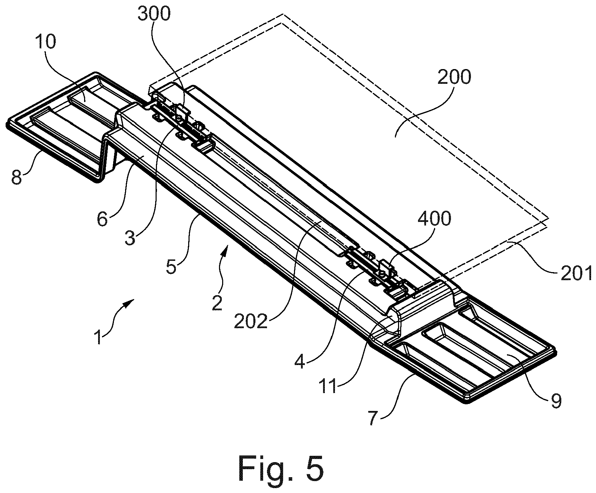

Das Kunststoffteil 2 ist ein einstückiges Kunststofftiefziehteil aus Polyethylen. Das Kunststoffteil 2 liegt auf einem ebenen Untergrund (nicht dargestellt) auf. Das Kunststoffteil 2 umfasst einen mittleren, plattenförmigen Abschnitt 5, an dem ein Solarmodul anordenbar ist (siehe hierzu auch Figur 5 in die zugehörige Figurenbeschreibung). Der plattenförmige Abschnitt 5 weist eine im wesentlichen rechteckige Außenkontur auf. Das Kunststoffteil 2 ist derart gestaltet, dass der Abschnitt 5, bei Auflage des Kunststoffteils 2 auf einem ebenen Untergrund, mit einer seiner beiden Hauptoberflächen 6 schräg nach oben ausgerichtet ist. An zwei gegenüberliegenden Seiten des Abschnitts 5 umfasst das Kunststoffteil 2 jeweils einen fußförmigen Abschnitt 7, 8. Der plattenförmige Abschnitt 2 geht jeweils fließend in den jeweiligen fußförmigen Abschnitt 7, 8 über. Mit den fußförmigen Abschnitte 7, 8 liegt das Kunststoffteil 2 auf dem Untergrund auf. Die fußförmigen Abschnitte 7, 8 umfassen jeweils einen plattenförmigen Abschnitt 9, 10 mit einer quadratischen Außenkontur. Auf diese plattenförmigen Abschnitte 9, 10 sind jeweils Beschwerungsmittel, insbesondere in Form einer quadratischen Steinplatte (nicht dargestellt), auflegbar. Der fußförmige Abschnitt 7 hat eine geringere Höhe als der fußförmige Abschnitt 8, so dass der Abschnitt 5, wie oben ausgeführt, schräg nach oben ausgerichtet ist. An der Seite des Abschnitts 5, an der dieser Abschnitt in den fußförmigen Abschnitt 7 übergeht, also an der Unterkante des Abschnitts 5, weist das Kunststoffteil 2 eine Anschlagkante 11 für ein Solarmodul auf. Insgesamt weist das Kunststoffteil 2 damit im Wesentlichen die Form einer Brücke auf.

Die beiden Metallteile 3, 4 wurden jeweils mittels Insert-Molding beim Tiefziehen des Kunststoffteils 2 in dieses eingeformt und sind hierdurch jeweils formschlüssig mit dem Kunststoffteil 2 verbunden. Beide Kunststoffteile 3, 4 weisen jeweils eine identische Gestalt in Form einer Profilschiene aus Aluminium auf, wie sie für die Montage von Solarmodulen bekannt ist. Beide Metallteile 3, 4 umfassen jeweils eine Nut 12, 13, in der ein Nutenstein einer Modulklemme für ein Solarmodul verschiebbar anordenbar ist. Die Metallteile 3, 4 sind an dem Abschnitt 5 des Kunststoffteils 2 in dieses eingebettet. Dabei ist das Metallteil 3 benachbart zu der Seite des Abschnitts 5 angeordnet, an der der Abschnitt 5 in den fußförmigen Abschnitt 8 übergeht (also an der Oberkante des Abschnitts 5), und das Metallteil 4 benachbart zu der Seite des Abschnitts 5 angeordnet, an der der Abschnitt 5 in den fußförmigen Abschnitt 7 übergeht (also an der Unterkante des Abschnitts 5). Dabei sind die Metallteile 3, 4 derart zueinander ausgerichtet, dass deren Nuten 12, 13 miteinander fluchten.

Figur 4 zeigt eine Schnittansicht des Aufstellers 1 im Bereich des Metallteils 3. Gut zu erkennen ist, wie das Metallteils 4 formschlüssig in den Abschnitt 5 des Kunststoffteils 2 eingebettet ist und nur im Bereich der Nut 12 nach außen, nämlich zur oberen Hauptoberfläche 6 des Abschnitts 5 hin, freiliegt. Hierdurch kann ein Nutenstein einer Modulklemme in die Nut 12 eingelegt und entlang der Nut 12 verschoben werden. Gleiches gilt für das Metallteil 3 entsprechend.

Gemäß den Figuren 5-6 umfasst der Aufsteller 1, über die in den Figuren 1-4 dargestellte Konfiguration hinaus, noch ein Solarmodul 200 sowie Modulklemmen 300, 400.

Das Solarmodul 100 weist die übliche plattenförmige Gestalt eines Solarmoduls mit einer rechteckigen Außenkontur auf. Mit einer seiner Kanten 201 liegt das Solarmodul 200 an der Anschlagkante 11 an. Mit einer seiner daran anstoßenden Kanten 202 ist das Solarmodul 200 über die Modulklemmen 300, 400 an dem Aufsteller 1 befestigt.

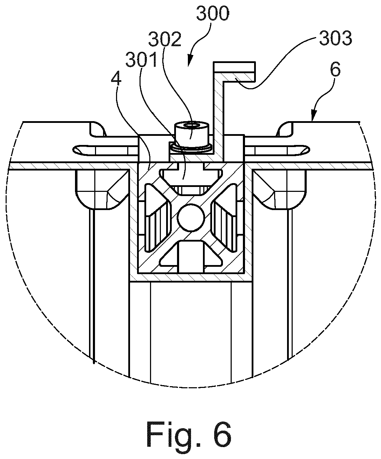

Die Modulklemmen 300, 400 sind handelsübliche Modulklemmen zur Befestigung von Solarmodulen an Profilschienen. In Figur 6 ist die an dem Metallteil 4 angeordnete Modulklemme 300 dargestellt. Die Modulklemme 300 umfasst einen Nutenstein 301, der verschiebbar in der Nut 12 des Metallteils 4 einliegt. In ein Innengewinde des Nutensteins 301 ist eine Zylinderkopfschraube 302 eingeschraubt. Über die Zylinderkopfschraube 302 ist eine Metallklemme 302 gegen das Metallteil 4 schraubbar. Im Spalt zwischen der Metallklemme 302 und der Hauptoberfläche 6 des Abschnitts 5 ist die Kante 202 des Solarmoduls 200 durch Quetschung am Aufsteller 1 befestigbar. Gleiches gilt für die Modulklemme 400 entsprechend.

In der praktischen Anwendung wird der Aufsteller 1 zunächst auf einem ebenen Untergrund aufgestellt. Anschließend wird ein Solarmodul 200 auf die Hauptoberfläche 6 des Abschnitts 5 des Aufstellers 1 aufgelegt, bis dieses mit seiner Kante 201 gegen die Anschlagkante 11 anliegt. In den Nuten 12, 13 der Metallteile 3, 4 sind jeweils die Modulklemmen 300, 400 angeordnet. Das Solarmodul wird nun gegen die Modulklemmen 300, 400 bewegt, bis die Kante 202 des Solarmoduls 200 gegen die Modulklemmen 300, 400 anliegt. Anschließend werden die Zylinderkopfschrauben 302 angezogen, so dass die Kante 201 durch die Klemmen 303 gegen die Hauptoberfläche 6 gepresst und schließlich durch Quetschung dort befestigt ist.

## Patentansprüche

**1.** Aufsteller (1) zur Aufstellung von wenigstens einem Solarmodul (200) auf einem Untergrund, wobei der Aufsteller (1) die folgenden Merkmale umfasst:
1.1 ein Kunststoffteil (2), welches
1.1.1 auf einen Untergrund auflegbar ist; und
1.2 wenigstens ein Metallteil (3, 4), wobei
1.2.1 an diesem wenigstens ein Befestigungsmittel (300, 400) für ein Solarmodul (200) anordenbar ist; und wobei
1.2.2 das wenigstens eine Metallteil (3, 4) formschlüssig mit dem Kunststoffteil (2) verbunden ist.

**2.** Aufsteller (1) nach Anspruch 1, wobei das wenigstens eine Metallteil (3, 4) in das Kunststoffteil (2) eingebettet ist.

**3.** Aufsteller (1) nach wenigstens einem der vorhergehenden Ansprüche, wobei das wenigstens eine Metallteil (3, 4) durch Insert-Molding in das Kunststoffteil (2) eingeformt ist.

**4.** Aufsteller (1) nach wenigstens einem der vorhergehenden Ansprüche, wobei das Kunststoffteil (2) einstückig ausgebildet ist.

**5.** Aufsteller (1) nach wenigstens einem der vorhergehenden Ansprüche, wobei das Kunststoffteil (2) als einstückiges Kunststofftiefziehteil ausgebildet ist.

**6.** Aufsteller (1) nach wenigstens einem der vorhergehenden Ansprüche, wobei an dem wenigstens einen Metallteil (3, 4) wenigstens ein Befestigungsmittel (300, 400) für ein Solarmodul (200) verschiebbar anordenbar ist.

**7.** Aufsteller (1) nach wenigstens einem der vorhergehenden Ansprüche, wobei das wenigstens eine Metallteil (3, 4) einen nutförmigen Abschnitt (12, 13) umfasst, in dem wenigstens ein Befestigungsmittel (300, 400) für ein Solarmodul (200) verschiebbar anordenbar ist.

**8.** Aufsteller (1) nach wenigstens einem der vorhergehenden Ansprüche, wobei das wenigstens eine Metallteil (3, 4) einen nutförmigen Abschnitt (12, 13) umfasst, in dem wenigstens ein Nutenstein (301) für eine Modulklemme (300, 401) für ein Solarmodul (200) verschiebbar anordenbar ist.

**10.** Aufsteller (1) nach wenigstens einem der vorhergehenden Ansprüche, wobei an dem wenigstens einen Metallteil (3, 4) wenigstens ein Befestigungsmittel (300, 400) für ein Solarmodul (200) entlang eines Oberflächenabschnitts (6) des Kunststofffteils (2) verschiebbar anordenbar ist.

**10.** Aufsteller (1) nach wenigstens einem der vorhergehenden Ansprüche, wobei an dem wenigstens einen Metallteil (3, 4) wenigstens ein Befestigungsmittel (300, 400) in Form einer Modulklemme anordenbar ist.

**11.** Aufsteller (1) nach wenigstens einem der vorhergehenden Ansprüche, wobei an dem wenigstens einen Metallteil (3, 4) wenigstens zwei Befestigungsmittel (300, 400) für ein Solarmodul (200) anordenbar sind.

**12.** Aufsteller (1) nach wenigstens einem der vorhergehenden Ansprüche, wobei an dem wenigstens einen Metallteil (3, 4) wenigstens zwei Befestigungsmittel (300, 400) für ein Solarmodul (200) anordenbar sind und wobei das Kunststoffteil (2) derart gestaltet ist, dass bei Auflegung des Kunststoffteils (2) auf einen ebenen Untergrund eines der zwei Befestigungsmittel (300) in einer höheren Position und eines der zwei Befestigungsmittel (400) in einer niedrigeren Position an dem wenigstens einen Metallteil (3, 4) anordenbar ist.

**13.** Aufsteller (1) nach wenigstens einem der vorhergehenden Ansprüche, ferner umfassend wenigstens ein Solarmodul (200).

**14.** Aufsteller (1) nach Anspruch 13, ferner umfassend Befestigungsmittel (300, 400) für das Solarmodul (200), wobei die Befestigungsmittel (300, 400) an dem wenigstens einen Metallteil (3, 4) angeordnet sind und wobei das Solarmodlu (200) über die Befestigungsmittel (3, 4) an dem Aufsteller (1) befestigt ist.

**15.** Verfahren zur Anordnung von wenigstens einem Solarmodul (100) an wenigstens einem Aufsteller (1) nach wenigstens einem der vorhergehenden Ansprüche, wobei das Verfahren die folgenden Schritte umfasst:
A. Zurverfügungstellung wenigstens eines Aufstellers (1) nach wenigstens einem der vorhergehenden Ansprüche;
B. Zurverfügungstellung wenigstens eines Solarmoduls (200);
C. Auflegen des Kunststoffteils (2) des wenigstens einen Aufstellers (2) auf einen Untergrund;
D. Befestigung des wenigstens einen Solarmoduls (200) an dem wenigstens einen Aufsteller (1).
